(19) **Europäisches Patentamt**
**European Patent Office**
**Office européen des brevets**

(11) **EP 2 083 113 B1**

(12) **EUROPEAN PATENT SPECIFICATION**

(45) Date of publication and mention
of the grant of the patent:
**26.10.2016 Bulletin 2016/43**

(51) Int Cl.:
*D06M 15/55* (2006.01)     *B29B 15/14* (2006.01)
*C08J 5/06* (2006.01)     *D06M 15/564* (2006.01)
*D06M 15/70* (2006.01)     *D06M 101/32* (2006.01)
*D02J 1/08* (2006.01)     *D01F 11/08* (2006.01)
*C08J 5/04* (2006.01)

(21) Application number: **07831251.9**

(22) Date of filing: **06.11.2007**

(86) International application number:
**PCT/JP2007/071519**

(87) International publication number:
**WO 2008/056645 (15.05.2008 Gazette 2008/20)**

(54) **POLYESTER MULTIFILAMENT FOR RESIN REINFORCEMENT AND PROCESS FOR PRODUCING THE SAME**

POLYESTERMULTIFILAMENT FÜR HARZARMIERUNG UND HERSTELLUNGSVERFAHREN DAFÜR

MULTIFILAMENTS DE POLYESTER POUR LE RENFORCEMENT DE RÉSINES, ET PROCÉDÉ DE FABRICATION ASSOCIÉ

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **07.11.2006 JP 2006301114**
**07.11.2006 JP 2006301113**

(43) Date of publication of application:
**29.07.2009 Bulletin 2009/31**

(73) Proprietors:
• **TEIJIN LIMITED**
**Chuo-ku**
**Osaka-shi**
**Osaka 541-0054 (JP)**
• **Mitsubishi Chemical Corporation**
**Chiyoda-ku**
**Tokyo 100-8251 (JP)**

(72) Inventors:
• **SHIMADA, Shintarou**
**Matsuyama-shi**
**Ehime 7918041 (JP)**
• **TERASAKA, Fuyuki**
**Matsuyama-shi**
**Ehime 7918041 (JP)**
• **MAKINO, Shouji**
**Matsuyama-shi**
**Ehime 7918041 (JP)**

(74) Representative: **Hallybone, Huw George**
**Carpmaels & Ransford LLP**
**One Southampton Row**
**London WC1B 5HA (GB)**

(56) References cited:
EP-A1- 1 205 593     JP-A- H0 345 738
JP-A- 01 168 916     JP-A- 02 154 067
JP-A- 02 154 068     JP-A- 05 059 609
JP-A- 07 082 666     JP-A- 07 279 039
JP-A- 08 218 228     JP-A- 48 027 017
JP-A- 63 006 172     JP-A- 2004 143 643
JP-A- 2005 002 497     JP-A- 2007 224 451
US-A- 4 751 143     US-A- 4 968 555
US-A1- 2003 198 794     US-B1- 6 528 113

**EP 2 083 113 B1**

**Description**

Technical Field

The present invention relates to polyester multifilaments for resin reinforcement which are satisfactorily homogeneously dispersed in a matrix resin to provide a filament-reinforced resin molded body excellent in mechanical characteristics and impact resistance.

Fiber-reinforced thermoplastic resins in which thermoplastic resins such as polyolefin resins are reinforced with staple fibers have been suitably used in various industrial parts because of their excellent mechanical characteristics such as tensile strength and rigidity. Previously, glass fiber which is inexpensive and excellent in dimensional stability and heat resistance has been heavily used, and glass fiber-reinforced resins have been used in many industrial products at present. However, effective utilization of resources and saving of energy have been taken up as problems to recent global environmental waste and future depletion of oil resources, and under the present circumstances, the glass fiber-reinforced resins have problems in terms of recyclability and weight saving, because the glass fiber-reinforced resins contain glass in resins. From such a background, fiberreinforced resins have been required to meet environmental challenges such as recyclability, as well as mechanical characteristics such as strength and impact resistance.

Further, the fiber-reinforced thermoplastic resin is usually produced by melt kneading a resin and reinforcing fiber, so that it has a disadvantage that the fiber becomes short at the time of production to result in deterioration in impact strength such as Izod impact strength or weight-drop impact strength. Furthermore, it has problems with anisotropy of strength, dimensional stability, appearance quality and the like according to the shape of a molded article, due to dispersion and orientation of the fiber in the resin. Accordingly, the use thereof is limited under the present circumstances.

As one in which fiber dispersibility and impact resistance of such a fiber-reinforced thermoplastic resin are improved, there is proposed a fiber-reinforced resin composition in which 5 to 60% by weight of 5 to 50 mm glass long fiber is melt kneaded with a polyolefin resin, for example, as shown in patent document 1 (JP-A-60-86139). However, in the glass fiber-reinforced resin molded article, when the glass fiber is melt kneaded with the matrix resin, the fiber breaks to become short. For this reason, it is necessary to blend a substantial amount of glass fiber for obtaining the sufficient reinforcing effect, resulting in failure to comply with needs for weight saving. Moreover, when the fiber-reinforced resin molded article is, for example, thermally recycled, the glass is melted in burning in a high-temperature furnace to damage the furnace, which causes a drawback in recyclability in terms of cost and operability. Further, fiber-reinforced resin compositions improved in fiber dispersibility and mechanical characteristics are proposed as described in patent document (JP-A-10-176085), patent document 3 (JP-A-2001-81336) and patent document 4(JP-A-2005-2202). However, all of them relate to glass fiber reinforcement, and have the same problems as described above.

On the other hand, a filament-reinforced resin which satisfies resin reinforcement, recyclability and weight saving by using polyester fiber excellent in mechanical characteristics, general versatility and recyclability as reinforcing fiber in unprecedented. The present inventors have tried to reinforce resins with polyester fiber. As a result, it has become clear that dispersibility of the polyester fiber in the matrix resins is low, resulting in failure to obtain the sufficient reinforcing effect such as strength and impact resistance.

Patent Document 1: JP-A-60-86139
Patent Document 2: JP-A-10-176085
Patent Document 3: JP-A-2001-81336
Patent Document 4: JP-A-2005-2202

EP 1205593 A1 discloses a polyester yarn coated with a first coating of a reaction product of a halohydroxy organic compound and a salt of a weak acid, characterized by a second coating over said first coating, of an epoxy resin having at least two epoxide groups, said resin being present in an amount in the range from 0.001 % to 1.0% by weight of said yarn, thereby resulting in excellent adhesion of the cord to the rubber.

US 2003/198794 disclose a polyester fiber cord for reinforcing rubber materials which is manufactured by applying a first aqueous processing liquid comprising a blocked polyisocyanate compound to a polyester fiber that has been beforehand provided with an epoxy compound during a yarn manufacturing process or in a state of a twisted cord in an amount of 0.5 to 5.0 % based on the fiber weight in terms of solids of the blocked isocyanate compound; the treated yarn is dried at a yarn temperature of at a yarn temperature of >(A+20) °C, wherein A°C is a dissociation temperature of the blocked isocyanate, and then subjected to heat treatment; and a second processing liquid comprising resorcin-formalin-rubber latex is applied to the yarn, followed by heat treatment.

US 6,528,113 B1 discloses an adhesive-treated polyester fiber cord having a high adhesion to non-vulcanized rubber, a high resistance to separation of fibers or filaments from each other, which is produced by successively impregnating a material cord three times with the first to third adhesive liquid containing a polyepoxide compound and a blocked isocyanate compound (1st), a resorcinol-formaldehyde resin and a rubber latex (2nd) and a resorcinol formal-

dehyde resin and a rubber component (3rd), each followed by heat treating.

US 4,751,143 A discloses a method for manufacturing a polyester fiber cord for reinforcing rubber materials having an improved adhesive property to rubber materials which comprises the steps of:

(1) applying a first aqueous processing liquid comprising a blocked polyisocyanate compound to a polyester fiber, that has been beforehand provided with an epoxy compound during a yarn manufacturing process or in a state of a twisted cord to activate adhesion, in an amount of 0.5 to 5.0% based on the fiber weight in terms of solids of the blocked isocyanate compound; (2) drying the treated yarn at a yarn temperature of >(A+20) °C, wherein A°C is a dissociation temperature of the blocked isocyanate, (3) subjecting the dried yarn to heat treatment; (4) applying a second processing liquid comprising resorcin-formalin-rubber latex to the resultant yarn, and (5) subjecting the yarn to heat treatment.

JP H03-45738 A discloses polyester multifilament yarn having excellent fatigue-resistance and easily adhesive property by combining an adhesive-treated fiber bundle with an adhesive-non-treated fiber bundle in a specific ratio, the fiber bundles comprising polyester fibers containing an ethylene terephthalate unit as a main structural unit and having a difference between the lengths thereof.

JP H07-279039 A discloses a polyester fiber for reinforcing polyolefin-based molding obtained in such a manner that a polyester fiber bundle is immersed in a treating solution containing (A) an epoxy compound and (B) an ionomer resin in a wt. ratio of the component A/B of 0.01~1.0 and heat-treated in order to improve adhesiveness to a polyolefin-based resin to provide the objective fiber reinforcing polyolefin-based resin moldings. Furthermore, the polyester bundle may be coated with the ionomer resin after previously treating the fiber bundle with the epoxy compound.

Problems That the Invention Is to Solve

An object of the invention is to solve problems as described above and to provide polyester multifilaments for resin reinforcement which are satisfactorily homogeneously dispersed in a matrix resin to provide a filament-reinforced resin molded body excellent in mechanical characteristics and impact resistance.

Means for Solving the Problem

The invention relates to polyester multifilaments for resin reinforcement to which a thermosetting resin is attached in an amount of 0.01 to 5.0% by weight based on the polyester multifilaments, wherein the polyester multifilaments have a degree of interlace entanglement of 2 to 15 tangles/m.

As the thermosetting resin used herein, an epoxy-based resin or a urethane-based resin is preferred.

Further, in the polyester multifilaments for resin reinforcement of the invention, the length of multifilament bundle portions satisfying $1 \leq Y/X \leq 3$ (wherein X represents the width of the multifilaments before immersion in water and Y represents the width of the multifilaments after immersion in water at 25°C for 1 minute) is preferably 50% or more of the length of the multifilaments before the immersion.

Such polyester multifilaments for resin reinforcement of the invention are obtained by imparting the thermosetting resin to the polyester multifilaments before the polyester multifilaments are once taken up.

Further, the polyester multifilaments for resin reinforcement of the invention are also obtained by imparting the thermosetting resin to the polyester multifilaments by impregnation, followed by heat treatment, after the polyester multifilaments have once been taken up.

Advantages of the Invention

The polyester multifilaments for resin reinforcement of the invention are a little opened in water at 25°C and excellent in bundling properties, so that the multifilaments for reinforcement are satisfactorily homogeneously dispersed in the matrix resin to be able to obtain the filament-reinforced resin molded body excellent in mechanical characteristics and impact resistance and also to be able to expect environmental effects such as improvements in weight saving and recyclability. Thus, the multifilaments have the great practical effects.

Brief Description of the Drawings

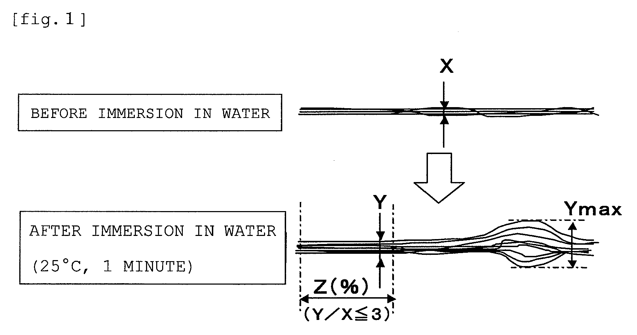

[Fig. 1] Fig. 1 is an illustrative view showing polyester multifilaments for resin reinforcement in the invention. Best Mode for Carrying Out the Invention

In the invention, the polyester multifilaments are multifilaments comprising polyethylene terephthalate, polyethylene naphthalate or a polyester mainly composed thereof, and are not limited at all in the molecular weight, the fineness, the number of filaments, the cross sectional shape, the multifilament physical properties, the fine structure, the presence or absence of an additive contained and the polymer properties such as the terminal carboxyl group concentration of the polyester multifilaments.

Incidentally, for the molecular weight of the polyester, in the case of polyethylene terephthalate, the intrinsic viscosity thereof (measured at a temperature of 35°C using o-chlorophenol as a solvent) is preferably from 0.60 to 1.20 dL/g, more preferably from 0.65 to 1.10 dL/g, and particularly preferably from 0.70 to 1.00 dL/g.

On the other hand, in the case of polyethylene naphthalate, for the molecular weight thereof, the intrinsic viscosity (the value measured at 35 °C using a solution of a mixed solvent of o-chlorophenol and o-dichlorobenzene (volume ratio: 6:4)) is preferably from 0.50 to 1.00 dL/g, more preferably from 0.55 to 0.95 dL/g, and still more preferably from 0.60 to 0.90 dL/g.

Further, the monofilament fineness of the polyester multifilaments is usually from 1 to 20 dtex, and preferably from about 2 to about 15 dtex.

Furthermore, the total fineness of the polyester multifilaments is not particularly limited, but it is usually from 150 to 3,000 dtex, and preferably from 250 to 2,000 dtex.

In addition, the number of filaments of the polyester multifilaments is not particularly limited, but it is usually from 10 to 1,000 filaments, and preferably from 50 to 500 filaments.

The polyester multifilaments for resin reinforcement in the invention are characterized in that a thermosetting resin is attached to the polyester multifilaments in an amount of 0.01 to 5.0% by weight. In the invention, the polyester multifilaments are coated with the thermally stable thermosetting resin, thereby being able to maintain bundling properties of the polyester multifilaments in producing filament-reinforced resin pellets and to densely fill around the reinforcing filaments with the resin. Thus, the filaments are opened at the time of melt kneading in molding the filament-reinforced resin to be able to exhibit homogeneous dispersibility. When the amount of the thermosetting resin attached is less than 0.01% by weight, bundling properties of the filaments enough to exhibit the effects of the invention are not obtained. On the other hand, when the amount attached exceeds 5.0% by weight, the filaments become too hard, resulting in deteriorated processability. Further, it becomes difficult to open at the time of molding, so that there is a problem that the reinforcing effect and appearance quality of the resin molded article are poor. The amount of the thermosetting resin attached to the polyester multifilaments in the invention is preferably from 0.03 to 3.5% by weight, more preferably from 0.05 to 2.0% by weight, still more preferably form 0.05 to 1.0% by weight, and particularly preferably from 0.05 to 0.5% by weight. According to such polyester multifilaments for resin reinforcement of the invention, the multifilaments for reinforcement are satisfactorily homogeneously dispersed in the matrix resin to provide the filament-reinforced resin molded body excellent in mechanical characteristics and impact resistance.

As the thermosetting resin used in the polyester multifilaments used in the invention, there is, for example, an unsaturated polyester resin, a vinyl ester resin, an epoxy-based resin, a phenolic (resol type) resin, a urea-melamine resin, a polyimide, a urethane-based resin, a copolymer or a modified polymer thereof, or the like. In particular, an epoxy-based resin or a urethane-based resin is preferred from the viewpoints of handling-processability and mechanical characteristics.

Of these, specific examples of the epoxy-based resins (including epoxy compounds) include diglycidyl ether compounds such as ethylene glycol diglycidyl ether and polyethylene glycol diglycidyl ether, propylene glycol diglycidyl ether and polypropylene glycol diglycidyl ether, 1,4-butanediol diglycidyl ether, neopentyl glycol diglycidyl ether, polytetramethylene glycol diglycidyl ether and a polyalkylene glycol diglycidyl ether, and polyglycidyl ether compounds such as glycerol polyglycidyl ether, diglycerol polyglycidyl ether and polyglycerol polyglycidyl ether, sorbitol polyglycidyl ether, arabitol polyglycidyl ether, trimethylolpropane polyglycidyl ether, pentaerythritol polyglycidyl ether and a polyglycidyl ether of an aliphatic polyhydric alcohol. Preferred is an aliphatic polyglycidyl ether having a highly reactive glycidyl group. More preferably, polyethylene glycol diglycidyl ether, polypropylene glycol diglycidyl ether, an alkanediol diglycidyl ether and the like are preferred.

Further, the urethane-based resin is one synthesized by polyaddition reaction using a polyisocyanate and a polyol as main raw materials. The above-mentioned polyisocyanate may be any isocyanate compound, such as an aromatic isocyanate represented by tolylene diisocyanate or the like, an aliphatic isocyanate such as hexamethylene diisocyanate or an alicyclic isocyanate. Further, as the above-mentioned polyol, there is generally used polyethylene glycol, polytetramethylene glycol, a polyester-based polyol or the like. Furthermore, it is also possible to obtain the urethane-based resin by blocking a terminal of an isocyanate component using an appropriate blocking agent to form a prepolymer, and then, polymerizing it by heating.

Methods for producing the polyester multifilaments for resin reinforcement in the invention include a method of first imparting the above-mentioned thermosetting resin to the polyester multifilaments before they are taken up in a cheese form in a process of producing the polyester multifilaments, and/or a method of impregnating the polyester multifilaments with the thermosetting resin after the polyester multifilaments have once been taken up, and conducting heat treatment. Either method may be employed as long as the effects of the invention are not impaired.

Further, the polyester multifilaments of the invention are entangled. The degree of entanglement is from 2 to 15 tangles/m, more preferably from 3 to 12 tangles/m, still more preferably from 3 to 10 tangles/m, and particularly preferably from 4 to 9 tangles/m. This makes it possible to exhibit the above-mentioned effects more prominently, combined with the function of coating the polyester multifilaments with the thermosetting resin. That is to say, when the multifilaments have no tangle or the degree of entanglement is less than 2 tangles/m, bundling properties of the multifilaments in producing the filament-reinforced resin pellets tend to deteriorate. On the other hand, when the degree of entanglement exceeds 15 tangles/m, homogenous dispersibility of the filaments in molding the filament-reinforced resin tends to deteriorate. The entanglement is preferably air entanglement using interlacing or the like.

Specifically, the polyester multifilaments for resin reinforcement of the invention can be produced, for example, in the following manner. That is to say, there is mentioned a production method of imparting a spinning oil containing an amine compound to melt-spun undrawn polyester multifilaments, hot drawing them, then, imparting a finish oil containing a thermosetting resin, for example, an epoxy compound, conducting entangling treatment, and taking up in a cheese form. However, the invention is not limited thereby.

The amine compound-containing spinning oil as used herein preferably contains an amine compound in which 2 to 20 mol of ethylene oxide and/or propylene oxide are added to an aliphatic amine having 4 to 22 carbon atoms. As the other spinning oil constituents, there can be contained ones used in usual spinning oils for polyester fiber, such as a lubricating agent, an emulsifier and an antistatic agent. At this time, it is preferred that a thermosetting resin such as an epoxy compound is not contained. The lubricating agents include mineral oil, a fatty acid ester and the like, the emulsifiers include a higher alcohol and an ethylene oxide (EO) adduct, and the antistatic agents include various anionic and cationic surfactants and the like.

For the ratio of such respective components of the spinning oil, it is preferred that 3 to 20% by weight of the amine compound, 30 to 80% by weight of the lubricating agent, 20 to 70% by weight of the emulsifier and proper amounts of the other additives are combined to 100% by weight. Guides, draw rollers and the like in a yarn-making process are less contaminated while exhibiting the original functions of smoothness and bundling properties of the spinning oil, which tends to improve productivity and product quality.

The spinning oil can be imparted to melt-spun undrawn filaments by a usual roller oiling method or nozzle oiling method. The amount of the spinning oil imparted is preferably from 0.10 to 2.0% by weight, and more preferably from 0.30 to 1.0% by weight. The spinning oil solution may be imparted either in a form of a straight oil diluted with low-viscosity mineral oil, or in a form of an aqueous emulsion, without being particularly limited.

The undrawn polyester multifilaments to which the spinning oil has been imparted are hot drawn and heat treated by conventional methods as needed. Thereafter, the finish oil containing the thermosetting resin such as the epoxy compound is imparted thereto by the usual roller oiling method or nozzle oiling method. The epoxy compound as used herein is preferably an epoxy compound having two or more epoxy groups in one molecule. The amount of the thermosetting resin attached is from 0.01 to 5% by weight, preferably from 0.03 to 3.5% by weight, and more preferably from 0.05 to 2% by weight, based on the polyester multifilaments, as described above. The finish oil is generally used in a form of the aqueous emulsion. The lubricating agent, the emulsifier, the antistatic agent and the other additives as used in the above-mentioned spinning oil may be mixed as needed in the finish oil.

On the other hand, as the method of imparting the above-- mentioned thermosetting resin to the polyester multifilaments by impregnation, followed by heat treatment, after the polyester multifilaments have once been taken up, for example, a treatment liquid containing the above-mentioned epoxy compound, a mixture of the isocyanate compound and the polyhydric alcohol compound or the like is attached to the polyester multifilaments, and heat treated with a heating roller or a noncontact heater. As a method of imparting the thermosetting resin to the polyester multifilaments, there can be used the usual roller oiling method or nozzle oiling method. However, when the amount of the thermosetting resin to the filaments is within the range of the invention, the polyester multifilaments may be immersed in a treating bath in which the treating agents are placed. It is not particularly limited whether a curing agent, the other additives and the like are blended in the treatment liquid or imparted to the filaments as other treating agents, separately from the above-mentioned treating agents. However, in this case, it is necessary to select, considering stability of the treating agents, and the like. It goes without saying that stretch and/or relaxation heat treatment may be concomitantly conducted to the polyester multifilaments.

For the entangling treatment, a method of utilizing air current, a liquid current or the like can be employed. However, in terms of workability and obtaining tangles within the above-mentioned range, air entangling treatment using an interlace nozzle is preferred.

It is preferred also for more improving bundling properties of the multifilaments that warming treatment at a temperature of 20 to 70°C, preferably 30 to 60°C, for 50 hours or more is conducted to the polyester multifilaments for resin reinforcement obtained by these methods, for enhancing curing reaction of the thermosetting resin, for example, the epoxy resin, as needed.

The above polyester multifilaments for resin reinforcement in the invention are characterized in that the length of multifilament bundle portions satisfying $1 \leq Y/X \leq 3$ (wherein X represents the width of the multifilaments before immersion in water and Y represents the width of the multifilaments after immersion in water at 25°C for 1 minute (see Fig. 1)) is 50% or more of the length of the multifilaments before the immersion. Y/X represents bundling properties of the multifilaments in a width direction in an aqueous medium, namely in a solution, and the smaller Y/X value shows that bundling properties of the multifilaments are more excellent. Preferred is Y/X≤2.5, and more preferred is Y/XX≤2. In the case of Y/X>3, bundling properties of the multifilaments are insufficient, and dispersibility of the multifilaments in the matrix resin is deteriorated, so that the sufficient reinforcing effect is not obtained in mechanical characteristics such as strength and impact resistance of the molded article, and appearance quality is also deteriorated. This is therefore unfavorable. On the other hand, the case of Y/X<1 shows that the width of the multifilaments is decreased by immersion thereof in water at 25°C. In addition to bundling properties, changes in monofilament diameter due to elution of components of the multifilaments in water or self extension are considered, which causes inhibition of the reinforcing effect in the filament-reinforced resin molded body, poor dispersion or a decrease in dimensional stability. This is therefore unfavorable.

Further, the terminology "the length of multifilament bundle portions satisfying 1≤Y/X≤3 is 50% or more of the length of the multifilaments before the immersion" represents bundling properties in a longitudinal direction of the multifilaments, and the larger this value is, the less the multifilaments are opened in the longitudinal direction thereof, showing good bundling properties. When the length of multifilament bundle portions satisfying 1≤Y/X≤3 is less than 50% of the length of the multifilaments before the immersion, bundling properties of the multifilaments in the longitudinal direction is low, and dispersibility of the multifilaments in the matrix resin is deteriorated, so that the sufficient reinforcing effect is not obtained in mechanical characteristics such as strength and impact resistance of the molded article, and appearance quality is also deteriorated. This is therefore unfavorable. In the invention, the length of multifilament bundle portions satisfying 1≤Y/X≤3 is preferably 65% or more and more preferably 80% or more of the length of the multifilaments before the immersion. Incidentally, the upper limit of this theoretically becomes 100%. By such polyester filaments, the reinforcing filaments are satisfactorily homogeneously dispersed in the matrix resin to provide the filament-reinforced resin molded body excellent in mechanical characteristics and impact resistance.

In the invention, in order to adjust the length of multifilament bundle portions satisfying 1≤Y/X≤3 to 50% or more of the length of the multifilaments before the immersion, there is no particular limitation. This is achieved by a combination of conditions such as the fineness of the multifilaments, the monofilament fineness, the kind of thermosetting resin attached to the multifilaments, the amount thereof attached, the attaching method, the heat treatment temperature and the heat treatment time. In particular, the thermosetting resin is cured by heat treatment in a state where the multifilaments to which the thermosetting resin is attached is arranged under tension and fixed, thereby being able to obtain it more efficiently. For example, in the method of imparting the epoxy resin to the polyester multifilaments before the polyester multifilaments are once taken up, it can be obtained by conducting warming treatment at a temperature of 30 to 60°C for 50 hours or more in a state of a cheese-shaped package obtained by taking up the multifilaments.

As described above, the polyester multifilaments for resin reinforcement of the invention excellent in bundling properties, in which the length of multifilament bundle portions satisfying 1≤Y/X≤3 (wherein X represents the width of the multifilaments before immersion in water and Y represents the width of the multifilaments after immersion in water at 25°C for 1 minute) is 50% or more of the length of the multifilaments before the immersion, exhibits satisfactory and homogeneous dispersibility of the multifilaments in the matrix resin, thereby being able to improve mechanical characteristics such as strength and impact resistance of the molded article. In detail, the thermosetting resin is attached to the polyester multifilament in amount of 0.01 to 5.0% by weight, thereby being able to exhibit satisfactory and homogeneous dispersibility of the multifilaments in the matrix resin, thereby being able to improve mechanical characteristics such as strength and impact resistance of the molded article. Although a mechanism of exhibiting the effects of the invention is not clear, it is considered that coating of the polyester multifilaments with the thermosetting resin causes no occurrence of deterioration of bundling properties and an arranged state under tension of the multifilaments for resin reinforcement due to heat or melting and dissolution thereof in the matrix resin at the time when filament-reinforced resin strands and pellets are produced, and that the filaments are opened for the first time by shear force by a screw at the time of the subsequent melt molding, thereby being able to homogeneously disperse the filaments without breakage or entanglement thereof.

Further, the above-mentioned entanglement is performed to the polyester multifilaments, thereby being able to easily satisfy the above-mentioned Y/X, combined with the effect due to imparting the thermosetting resin.

The polyester multifilaments of the invention are homogeneously dispersed in the matrix resin to exhibit excellent performance, and when the matrix resin is a polyolefinic resin such as a polyethylenic or polypropylenic resin, the performance thereof is prominently exhibited. The polypropylenic resin such as polypropylene alone or a polyethylene-polypropylene copolymer comprising polypropylene as a main component is preferred among others.

The resin composition reinforced with the polyester multifilaments for resin reinforcement of the invention is not particularly limited. However, taking the molding temperature and the like into consideration, they can be suitably used in the polyolefinic resin such as polyethylene or polypropylene. Examples

The invention will be described in more detail below with reference to examples, but the invention is not limited thereby.

(1) Bundling Properties of Multifilaments

There were measured the multifilament width X (mm) of 100-cm long multifilaments before immersion in water, the multifilament width Y (mm) after immersion in water at 25°C for 1 minute and the length Z (cm) of multifilament bundle portions satisfying $1 \leq Y/X \leq 3$, and the filament bundling rate was calculated from the following equation (see Fig. 1):

$$\text{Filament bundling rate (\%)} = (Z/100) \times 100 = Z$$

Incidentally, the maximum multifilament width Ymax (mm) after immersion in water at 25°C for 1 minute was measured, and the value of Ymax/X (maximum opening) was calculated, as an index for indicating the degree of opening of filaments of the multifilaments.

(2) Homogeneous Dispersibility of Multifilaments (Appearance Evaluation)

A surface of a flat plate of a molded article was visually observed. A three-step evaluation was made, taking as "Excellent (○)" the case of such extremely homogeneous dispersion that no filament bundle not opened was observed, as "Acceptable (△)" the case where filament bundles not opened are quite slightly observed, and as "Unacceptable (×)" the case of such inhomogeneous dispersion that many filament bundles not opened or entangled were observed.

(3) Fineness of Multifilaments, Number of Filaments, Strength and Elongation, Dry Heat Shrinkage Ratio and Degree of Interlace Entanglement

Measurement was made in accordance with JIS-L-1013. Incidentally, the dry heat shrinkage ratio was measured in accordance with the filament shrinkage ratio (B process).

(4) Tensile Strength at Break and Elongation at Break of Resin Molded Article

For a TYPE-I bar of 3.2 mm thick × 12.7 mm wide obtained by molding, measurement was made at a test speed of 50 mm/min in accordance with ASTM-D-638-02.

(5) Izod Impact Strength

A bar of 6.4 mm thick × 12.7 mm wide × 127 mm long obtained by molding was cut to half the length thereof, 63.5 mm. For the resulting bar, measurement was made in accordance with the ASTM-D-256-00 method under the following conditions:

Number of revolutions of notch processing: 400 rpm
Feed speed of notch processing: 120 mm/min
Hammer capacity: 60 kgf·cm
Measuring temperatures: 23°C, -40°C

(6) Linear Coefficient of Expansion

Measurement was made in accordance with ASTM-D-696. A test piece of 15.0 mm long × 5.0 mm wide × 2.0 mm thick was sampled from a flat plate molded, and linear coefficients of expansion in a longitudinal direction (MD) and a width direction (TD) were determined.

[Example 1]

Using polyethylene terephthalate chips having an intrinsic viscosity (measured in an o-chlorophenol solvent at 35°C) of 1.01 dL/g, polyester multifilaments of 1,670 dtex/250 filaments having a strength of 8.2 cN/dtex, an elongation of 16.0%, a dry heat shrinkage ratio at 150°C of 9.5%, a degree of interlace entanglement of 8 interlaced portions/m and an amount of an epoxy resin attached of 0.1% by weight were obtained by a melt spinning process in the following manner.

A spinning oil mainly comprising a polyether ester-based component containing 8% by weight of POE (10) lauryl aminoether was imparted to undrawn multifilaments spun from a spinning die and cool-solidified to an amount of an amine compound component attached of 0.02% by weight based on the multifilaments, and the multifilaments were taken up by a roller. Then, a first stage drawing was carried out between a first roller of 110°C and a second roller at a draw ratio of 3.5, and further, a second stage drawing was carried out between the second roller and a third roller of 220°C to a total draw ratio of 5.6. Successively, a relaxation of 4% was given between the third roller and a fourth roller, and a 40% by weight aqueous solution of polyglycerol polyglycidyl ether ("Denacol EX-512" manufactured by Nagase Chemtex Corporation) was imparted thereto by a roller oiling method to an amount of an epoxy component attached of 0.1% by weight based on the multifilaments. Entanglement was imparted with an interlace nozzle between the fourth roller and a winder, and then, the resulting multifilaments were taken up on a cheese-shaped package at a speed of 3,000 m/min. Then, heat treatment was conducted at 55°C for 120 hours to obtain polyester multifilaments for resin reinforcement.

The resulting polyester multifilaments for resin reinforcement and a polypropylene resin (Novatec PP SA06A manufactured by Japan Polypropylene Corporation) were pultruded by using a single screw extruder having a crosshead die to produce filament-reinforced polypropylene resin pellets. The filament content was adjusted to 30% by weight, and the pellet length to 10 mm. Then, the resulting filament-reinforced polypropylene resin pellets were supplied to a injection molding machine, and molded at a cylinder temperature of 210°C, a mold temperature of 70°C, a back pressure of 10 kg/cm$^2$ and a screw revolution speed of 50 rpm to form a flat plate of 80 mm $\times$ 100 mm $\times$ 2.0 mm thick, a bar of 6.4 mm thick $\times$ 12.7 mm wide $\times$ 127 mm long and a TYPE-I bar of 3.2 mm thick $\times$ 12.7 mm wide, respectively. The evaluation results of the multifilaments and the filament-reinforced resin molded articles are collectively shown in Table 1.

[Examples 2 to 8 and Comparative Example 1]

Polyester multifilaments of 1,670 dtex/250 filaments were obtained in the same manner as in Example 1 with the exception that the amount of the epoxy component imparted in the roller oiling in the production process of the polyester multifilaments was changed as shown in Table 1 by adjusting the degree of entanglement with an interlace nozzle. Incidentally, in Example 6, no entangling treatment was conducted. Then, filament-reinforced resin molded articles were obtained in the same manner as in Example 1. The evaluation results of the multifilaments and the filament-reinforced resin molded articles are collectively shown in Table 1.

[Comparative Example 2]

Polyester multifilaments of 1,670 dtex/250 filaments were obtained in the same manner as in Example 1 with the exception that no polyglycerol polyglycidyl ether was imparted in the production process of the polyester multifilaments, and that no warming treatment of the multifilaments after taken up was conducted. The evaluation results of the multifilaments and the filament-reinforced resin molded articles are collectively shown in Table 1.

[Table 1]

| | Example 1 | Example 2 | Example 3 | Example 4 | Example 5 |
|---|---|---|---|---|---|
| <Polyester Multifilaments for Resin Reinforcement | | | | | |
| Strength (cN/dtex) | 8.5 | 8.5 | 8.3 | 8.1 | 8.6 |
| Elongation (%) | 16.0 | 16.2 | 15.7 | 15.3 | 16.1 |
| Dry Heat Shrinkage Ratio at 150°C (%) | 9.5 | 9.6 | 9.5 | 9.5 | 9.6 |
| Degree of Entanglement (tangles/m) | 8 | 8 | 8 | 8 | 2 |
| Amount of Epoxy-Based Resin Attached (Based on Polyester) (% by weight) | 0.1 | 0.05 | 0.5 | 5.0 | 0.1 |
| Maximum Opening Ymax/X | 2 | 2.3 | 1.1 | 1.0 | 2.3 |
| Filament Bundling Rate Z (1≤Y/X≤3) | 100 | 85 | 100 | 100 | 97 |
| <Physical Properties of Filament--Reinforced Molded Article> | | | | | |
| Homogeneous Dispersibility of Multifilaments (Appearance Evaluation) | ○ | ○ | ○ | ○ | ○ |
| Breaking Strength (MPa) | 30 | 31 | 30 | 30 | 32 |
| Breaking Elongation (%) | 41 | 41 | 40 | 37 | 43 |
| Izod Impact Strength (23°C) (KJ/m$^2$) | 41 | 43 | 41 | 40 | 42 |
| Izod Impact Strength (-40°C) (KJ/m$^2$) | 29 | 32 | 30 | 28 | 32 |
| Linear Coefficient of Expansion MD (10$^{-5}$/°C) | 7.2 | 7.4 | 7.2 | 7.1 | 7.3 |
| Linear Coefficient of Expansion TD (10$^{-5}$/°C) | 8.3 | 8.1 | 8.3 | 8.4 | 8.3 |

| | Example 6 | Example 7 | Example 8 | Comparative Example 1 | Comparative Example 2 |
|---|---|---|---|---|---|
| <Polyester Multifilaments for Resin Reinforcement | | | | | |
| Strength (cN/dtex) | 8.6 | 8.5 | 8.4 | 8.3 | 8.2 |
| Elongation (%) | 16.2 | 16.2 | 16.4 | 15.2 | 15.5 |
| Dry Heat Shrinkage Ratio at 150°C (%) | 9.7 | 9.5 | 9.5 | 9.4 | 10.0 |
| Degree of Entanglement (tangles/m) | – | 15 | 17 | 8 | 8 |
| Amount of Epoxy-Based Resin Attached (Based on Polyester) (% by weight) | 0.1 | 0.1 | 0.1 | 7.0 | – |
| Maximum Opening Ymax/X | 0.8 | 2 | 1 | 0.6 | 11 |
| Filament Bundling Rate Z ($1 \leq Y/X \leq 3$) | 90 | 100 | 100 | 100 | 10 |
| <Physical Properties of Filament--Reinforced Molded Article> | | | | | |
| Homogeneous Dispersibility of Multifilaments (Appearance Evaluation) | △ | ○ | △ | × | × |
| Breaking Strength (MPa) | 28 | 29 | 28 | 23 | 25 |
| Breaking Elongation (%) | 37 | 38 | 36 | 12 | 13 |
| Izod Impact Strength (23°C) (KJ/m$^2$) | 37 | 39 | 36 | 28 | 30 |
| Izod Impact Strength (-40°C) (KJ/m$^2$) | 27 | 28 | 27 | 25 | 24 |
| Linear Coefficient of Expansion MD ($10^{-5}/°C$) | 7.1 | 7.1 | 7.0 | 7.0 | 6.9 |
| Linear Coefficient of Expansion TD ($10^{-5}/°C$) | 8.4 | 8.5 | 8.5 | 8.8 | 9.0 |

As apparent from the results of Table 1, the polyester multifilaments for resin reinforcement of the invention shown in Examples 1 to 8 are not opened and excellent in bundling properties, so that homogeneous dispersibility of the multifilaments in the filament-reinforced resin molded articles is improved. As a result, it is shown that strength, elongation and impact resistance of the molded articles are significantly improved to exhibit the excellent reinforcing effect. Further, the difference between the linear coefficients of expansion in the longitudinal direction (MD) and the width direction (TD) decreases. This is considered to be a result of randomization of orientation of the reinforcing multifilaments by homogeneous dispersion. On the other hand, in Comparative Example 1, the amount of the epoxy-based resin attached is much outside the range of the invention, resulting in poor appearance evaluation and physical properties of the resulting multifilaments. Further, use of the polyester multifilaments to which no thermosetting resin is attached in Comparative Example 2 results in deterioration of a dispersed state of the multifilaments in the filament-reinforced resin molded article, and a state where the multifilaments cohere or are entangled has been observed.

Industrial Applicability

When used for resin reinforcement of a matrix resin, the polyester multifilaments for resin reinforcement of the invention are satisfactorily homogeneously dispersed in the matrix resin to provide a filament-reinforced resin molded body excellent in mechanical characteristics and impact resistance. Accordingly, they are useful as multifilaments for resin reinforcement for the filament-reinforced resin molded body of a thermoplastic resin such as an olefinic resin.

**Claims**

1. Polyester multifilaments for resin reinforcement to which a thermosetting resin is attached in an amount of 0.01 to 5.0% by weight based on the polyester multifilaments, wherein the polyester multifilaments have a degree of interlace entanglement of 2 to 15 tangles/m.

2. The polyester multifilaments for resin reinforcement according to claim 1, wherein the thermosetting resin is an epoxy-based resin or a urethane-based resin.

3. The polyester multifilaments for resin reinforcement according to claim 1 or 2, wherein the length of multifilament bundle portions satisfying $1 \leq Y/X \leq 3$ (wherein X represents the width of the multifilaments before immersion in water and Y represents the width of the multifilaments after immersion in water at 25°C for 1 minute) is 50% or more of the length of the multifilaments before the immersion.

4. A method for producing the polyester multifilaments for resin reinforcement according to any one of claims 1 to 3, comprising imparting a thermosetting resin to polyester multifilaments before the polyester multifilaments are once taken up.

5. A method for producing the polyester multifilaments for resin reinforcement according to any one of claims 1 to 3, comprising imparting a thermosetting resin to polyester multifilaments by impregnation, followed by heat treatment, after the polyester multifilaments have once been taken up.

**Patentansprüche**

1. Polyestermultifilamente zur Harzarmierung mit einem darauf in einer auf die Polyestermultifilamente bezogenen Menge von 0,01 bis 5,0 Gew.-% aufgebrachten heißhärtbarem Harz, wobei die Polyestermultifilamente mit 2 bis 15 Knoten/m verwirbelt sind.

2. Polyestermultifilamente zur Harzarmierung nach Anspruch 1, bei denen es sich bei dem heißhärtbarem Harz um ein Harz auf Basis von Epoxid oder um ein Harz auf Basis von Urethan handelt.

3. Polyestermultifilamente zur Harzarmierung nach Anspruch 1 oder 2, bei denen die Länge der Multifilamentbündel-lanteile, welche die Bedingung $1 \leq Y/X \leq 3$ erfüllen, wobei X die Breite der Multifilamente vor und Y diejenige nach 1-minütigem Eintauchen in Wasser von 25°C bedeuten, 50% und mehr der Länge der Multifilamente vor dem Eintauchen entspricht.

4. Verfahren zur Herstellung der Polyestermulti-filamente zur Harzarmierung gemäß einem der Ansprüche 1 bis 3, bei dem man die Polyestermultifilamente zunächst mit einem heißhärtbaren Harz beaufschlagt und anschließend einmalig aufnimmt.

**5.** Verfahren zur Herstellung der Polyestermultifilamente zur Harzarmierung gemäß einem der Ansprüche 1 bis 3, bei dem man die Polyestermultifilamente zunächst mit einem heißhärtbarem Harz imprägniert und anschließend nach einmaliger Aufnahme einer Hitzebehandlung unterwirft.

**Revendications**

**1.** Multifilaments de polyester destinés au renforcement d'une résine, auxquels une résine thermodurcissable est fixée dans une quantité de 0,01 à 5,0 % en poids relativement aux multifilaments de polyester, les multifilaments de polyester ayant un degré d'enchevêtrement par entrelacement de 2 à 15 enchevêtrements/m.

**2.** Multifilaments de polyester destinés au renforcement d'une résine selon la revendication 1, la résine thermodurcissable étant une résine à base d'époxyde ou une résine à base d'uréthane.

**3.** Multifilaments de polyester destinés au renforcement d'une résine selon la revendication 1 ou 2, la longueur des portions sous forme de faisceaux de multifilaments satisfaisant $1 \leq Y / X \leq 3$ (où X représente la largeur des multifilaments avant immersion dans de l'eau et Y représente la largeur des multifilaments après immersion dans de l'eau à 25 °C pendant 1 minute) représentant 50 % ou plus de la longueur des multifilaments avant l'immersion.

**4.** Procédé de fabrication de multifilaments de polyester destinés au renforcement d'une résine selon l'une quelconque des revendications 1 à 3, comprenant la mise en contact d'une résine thermodurcissable avec les multifilaments de polyester avant la collecte des multifilaments de polyester.

**5.** Procédé de fabrication de multifilaments de polyester destinés au renforcement d'une résine selon l'une quelconque des revendications 1 à 3, comprenant la mise en contact d'une résine thermodurcissable avec les multifilaments de polyester par imprégnation, suivie d'un traitement thermique, après la collecte des multifilaments de polyester.

[fig.1]

**REFERENCES CITED IN THE DESCRIPTION**

**Patent documents cited in the description**

- JP 60086139 A
- JP 10176085 A
- JP 2001081336 A
- JP 2005002202 A
- EP 1205593 A1

- US 2003198794 A
- US 6528113 B1
- US 4751143 A
- JP H0345738 A
- JP H07279039 A